# EUROPÄISCHE PATENTSCHRIFT

(11) **EP 0 622 859 B1**
(45) Veröffentlichungstag und Bekanntmachung des Hinweises auf die Patenterteilung: **29.01.1997**
(21) Anmeldenummer: 94105908.1
(22) Anmeldetag: 15.04.1994
(51) Int. Cl.: H01M 2/20, H01M 2/38, H01M 10/42

(54) **Kombinierte Lade- und Fluidsteckvorrichtung**
Combined charge and fluid connection device
Dispositif de connexion électrique et fluide combiné

(30) Priorität: 16.04.1993 DE 9305756 U
(43) Veröffentlichungstag der Anmeldung: 02.11.1994
(73) Patentinhaber: SCHALTBAU AKTIENGESELLSCHAFT, D-81677 München (DE)
(72) Erfinder: Keller, Gerhard, D-85591 Vaterstetten (DE)
(74) Vertreter: Grünecker, Kinkeldey, Stockmair & Schwanhäusser Anwaltssozietät

(56) Entgegenhaltungen:
- EP-A- 0 450 150
- DE-U- 9 114 909
- DE-U- 9 204 385

## Beschreibung

Die Erfindung bezieht sich auf eine kombinierte Lade- und Fluidsteckvorrichtung, insbesondere zum Anschließen eines Akkumulators mit Elektrolytumwälzung an eine Strom- und eine Fluidversorgungseinheit, mit einem Stecker und einer Dose, die jeweils mit einem miteinander koppelbaren Elektro- und einem Fluidanschluß versehen sind, gemäß dem Oberbegriff von Anspruch 1.

Eine solche Lade- und Fluidsteckvorrichtung ist z. B. aus dem deutschen Gebrauchsmuster 9016595.0 bekannt. Solche Lade- und Fluidsteckvorrichtungen werden vorwiegend für Naßbatterien eingesetzt, deren Elektrolytflüssigkeit während des Ladevorgangs der Batterie in Zwangsbewegung versetzt werden soll. Der Vorteil dieser Zwangsbewegung liegt darin, daß der Ladefaktor gegenüber dem Aufladen ohne Zwangszirkulation nennenswert herabgesetzt werden kann, wodurch für einen Fahrzeugpark mit batteriebetriebenen Fahrzeugen weniger Traktionsbatterien bereitgestellt werden müssen. Zum Erreichen dieser Zwangszirkulation wird ein Fluid, bevorzugt Luft, in die Elektrolytflüssigkeit geblasen. In dem oben erwähnten Gebrauchsmuster wird hierzu vorgeschlagen, eine im wesentlichen bekannte und genormte Ladesteckvorrichtung zu verwenden, auf dessen Stecker und Dose jeweils eine Montageplatte angeordnet ist, auf der miteinander kuppelbare Schlauchverbindungsstücke angeordnet sind. Das Kuppeln und Entkuppeln erfolgt in manchen Fällen über einen betätigbaren Verriegelungsmechanismus. An sich arbeitet diese als Huckepack-system aufgebaute Ladesteckvorrichtung sehr zuverlässig. Dennoch hat sich in der Praxis gezeigt, daß die Handhabung diese Steckvorrichtung durch ihren klobigen Aufbau und ihrem relativ schweren Gewicht bisweilen schwer zu handhaben ist, weil durch Unsymmetrie Verkantungen auftreten können. Daraus ergab sich die Forderung, eine kompaktere und leichtere, kombinierte Lade- und Fluidsteckvorrichtung zu schaffen. Zu beachten war hierbei allerdings, da bestimmte Abmessungen des Steckers genormt sind und nicht verändert werden dürfen. Dieses ist auch insofern wichtig, daß selbst ältere Ladesteckvorrichtungen, auch ohne Fluidanschluß, mit der neu zu konstruierenden Ladesteckvorrichtung kompatibel sein soll.

Aus dem deutschen Gebrauchsmuster 92 04 385.2 ist ein Batteriestecker bekannt, der zumindest eine Fluid-Kupplung innerhalb des Steckbereichs des Steckverbinders aufweist. Die dort gezeigte Ausführungsform weist an der Stelle von sonst üblichen Hilfskontakten Kupplungsteile auf, die bei dem Stecker aus einer zylindrischen Einführöffnung und in der Dose aus einem zylindrischen Röhrchen bestehen. Diese Kupplungselemente haben jeweils an der Rückseite des Steckers oder der Dose einen Fluidanschluß. Des weiteren ist in dieser Druckschrift erwähnt, daß die Fluidkupplungen als Codier- und Führungseinrichtungen ausgebildet sein können. Sie haben dann eine Doppelfunktion und ersetzen die in dieser Druckschrift gezeigte Codier-Anordnung.

Es ist daher die Aufgabe der vorliegenden Erfindung, eine leichte und kompakte Lade- und Fluidsteckvorrichtung zu schaffen, deren Stecker oder Dose mit entsprechend einem Stecker oder einer Dose einer älteren Steckvorrichtung in Verbindung gebracht werden kann.

Diese Aufgabe wird bei einer gattungsgemäßen kombinierten Ladeund Fluidsteckvorrichtung durch die kennzeichnenden Merkmale von Anspruch 1 gelöst. Die Führungsstege können bei dieser Erfindung so ausgestaltet sein, daß sie einerseits als Fluidleitung dienen und andererseits klein genug ausgeführt werden können, um weiterhin in die Führungsnuten älterer Steckverbinder eingesteckt werden zu können. Für diese Lösung kann auf den Bauraum zurückgegriffen werden, den an sich bekannte Ladesteckvorrichtung bereitstellen. Dadurch wird eine ziemlich kompakte Fluidförderung ermöglicht. Dieses ist ziemlich erstaunlich, da bei voller Kontakbbelegung an den normmäßig vorgesehenen Stellen dennoch eine Fluiddurchführung im Innern der Ladesteckvorrichtung möglich ist. Zum weiteren ist der zusätzliche Materialaufwand zum Erzielen der Fluidverbindung sehr gering.

In einer weiteren Ausführungsform kann jeweils am Steckansatz des Steckergehäuses zugewandten Ende des Fluidkanals eine Dichtung angeordnet sein, in die der entsprechend zugeordnete rohrförmige Ansatz im gesteckten Zustand von Stecker und Dose dichtend eingreift. Die Dichtung stellt sozusagen die Verlängerung des Fluidkanals dar und ermöglicht durch das Eingreifen des rohrförmigen Ansatzes eine nahezu verlustfreie Fluidbeförderung.

Hierbei ist es besonders günstig, wenn jeweils am Steckansatz des Steckergehäuses zugewandten Ende des Fluidkanals ein rohrförmiger Aufstecknippel angeordnet ist, dessen Bohrung einseitig im Fluidkanal mündet, und auf dessen Außenmantel die Dichtung aufgesetzt ist. Die Dichtung kann durch diese Ausgestaltung sehr genau positioniert und in ihrer Lage gehalten werden. Bevorzugt kann die Dichtung als Hülse mit einer Durchgangsbohrung ausgebildet sein, deren Länge größer ist als die Länge des in das Gehäuse integrierten Aufstecknippels. Es ist für die Funktion dieser Vorrichtung völlig ausreichend, wenn nur ein Teil der Dichtung auf dem Aufstecknippel angeordnet ist. Vorteilhafterweise kann hierbei die hülsenförmige Dichtung einseitig einen erweiterten Bohrungsansatz aufweisen, in dem der Aufstecknippel im wesentlichen stramm eingesteckt ist.

Vom Erleichtern des Einführens vom rohrförmigen Ansatz am Führungssteg kann sich die Bohrung der Dichtung am Aufstecknippel abgewandten Endbereich trichterförmig erweitern. Dadurch gleitet der rohrförmige Ansatz beim Steckvorgang sicher in die Dichtung ein.

In einer weiteren Ausführungform kann jeweils am Fluidkanal zugewandten Ende der Führungsnut im Steckergehäuse eine Aussparung angeordnet sein, in die sich der Aufstecknippel erstreckt und die Führungsnut mündet, wobei die Dichtung teilweise in der Aussparung und teilweise in der Führungsnut angeordnet ist. Durch diese Ausgestaltung ist die Aufnahme für die Dichtung vom Steckansatz zurückgesetzt, wodurch sich am Steckansatz selbst, gegenüber von bereits bekannten Steckverbindern, nichts zu ändern braucht. Wenn man bei dieser Anordnung die Dichtung von dem Aufstecknippel abzieht, kann dieser Stecker auch ohne weiteres zum Einführen in eine Dose älterer Ausführung gesteckt werden.

Günstigerweise kann die Dichtung an dem Aufstecknippel zugewandten Ende einen vergrößerten Kopf aufweisen, der mit seinem gegenüber dem übrigen Umfang der Dichtung überstehenden Rand in eine in der Aussparung entsprechend ausgeformte Hinterschneidung eingreift. Die Dichtung wird somit am Steckergehäuse eindeutig fixiert und kann nicht versehentlich durch das Abziehen der Dose von dem Aufstecknippel heruntergleiten.

Bevorzugt wird weiterhin, wenn die Köpfe zweier parallel zueinander angeordneter Dichtungen einheitlich als Kopfplatte ausgebildet sind, die in die Aussparung und die Hinterschneidungen eingreift. Zwei Fluidkanäle können nun durch ein einheitlich ausgestaltetes Teil abgedichtet werden. Günstig ist es hierbei auch, wenn die Kopfplatte der Dichtungen trapezförmig ausgebildet ist und in die entsprechend ausgeformten Hinterschneidungen eingreift, wobei die kürzere Seitenkante der Kopfplatte zum Grund der Aussparung weist. Die Trapezform erleichtert das Einfügen der Dichtung in die Aussparung, sowie das genaue Positionieren derselben.

Vorteilhafterweise kann zwischen den Dichtungen ein Klemmdorn in der Aussparung angeordnet sein. Dann ist die Kopfplatte der Dichtungen zwischen dem Klemmdorn und einer Rückwand der Aussparung positioniert. Durch diese Maßnahme wird ein Abziehen der Dichtung in Steckrichtung gänzlich verhindert.

Über den freien Endbereich des Schutzkragens von der Dose kann weiterhin jeweils ein Schlitz zwischen den Führungsstegen und dem Schutzkragen zum Formen der rohrförmigen Ansätze angeordnet sein. Durch diese Ausgestaltung wird bereits vorhandenes Material zur Ausformung der rohrförmigen Ansätze benutzt. Es stellt sich somit nicht das Problem, eine geeignete Fügeverbindung für die rohrförmigen Ansätze mit den Führungsstegen bereitzustellen. Günstigerweise kann der Schlitz eine Breite in etwa der Wanddicke der Dichtung aufweisen. Dadurch läßt sich ohne weiteres der rohrförmige Ansatz in die jeweilige Dichtung schieben.

Um weiterhin das Einführen des rohrförmigen Ansatzes in die Dichtung zu erleichtern, kann der rohrförmige Ansatz am freien Ende mit einer umlaufenden Einführschräge versehen sein. In einer weiteren Ausführungsform können die Fluidanschlüsse als rohrförmige Steckansätze ausgebildet sein, auf die Zuleitungsschläuche aufsteckbar sind. Diese Steckansätze stellen eine einfache Verbindungsmethode für die Schlauchleitungen dar und können ähnlich ausgestaltet sein wie die rohrförmigen Ansätze am Ende der Führungsstege.

Eine besonders gute, abdichtende Wirkung wird erzielt, wenn die Dichtung aus einem flexiblen Material, bevorzugt einem Gummiwerkstoff, hergestellt ist. Zur Unterstütung der abdichtenden Wirkung kann weiterhin die Bohrung der Dichtung in Form einer Labyrinthdichtung ausgebildet sein.

Bei einer weiteren Ausführungsform kann die Kopfplatte der Dichtung eine Profilöffnung aufweisen, die bei am Stckergehäuse angeordneter Dichtung mit der Aufnahme im wesentlichen fluchtend angeordnet ist und in die der Codierstift zumindest bereichsweise eingreift. Diese Maßnahme sorgt für eine verbesserte Verankerung der Dichtung am Steckergehäuse, da diese durch den Codierstift selbst bei häufigen Steckvorgängen sicher festgehalten wird.

Im folgenden werden Ausführungsbeispiele der vorliegenden Erfindung anhand einer Zeichnung näher erläutert. Es zeigen:
- Fig. 1: eine Explosionsdarstellung der wesentlichen Teile einer erfindungsgemäßen Lade- und Fluidsteckvorrichtung,
- Fig. 2: ein Steckergehäuse gemäß der vorliegenden Erfindung in einer Vorderansicht,
- Fig. 3: das Steckergehäuse aus Figur 2 in einer nach rechts gedrehten Seitenansicht,
- Fig. 4: ein Dosengehäuse gemäß der vorliegenden Erfindung in einer Vorderansicht,
- Fig. 5: das Dosengehäuse aus Figur 4 in einer Rückansicht,
- Fig. 6: eine Dichtung gemäß der vorliegenden Erfindung in einer halbgeschnittenen Darstellung,
- Fig. 7: eine weitere Ausführungsform der Dichtung gemäß der vorliegenden Erfindung,
- Fig. 8: eine schematische Darstellung des Stecker und Dosengehäuses in gestecktem Zustand im Halbschnitt,
- Fig. 9: eine weitere Ausführungsform der Dichtung gemäß der vorliegenden Erfindung,
- Fig. 10: die Dichtung aus Figur 9 entlang der Linie X-X geschnitten und
- Fig. 11: die Dichtung aus Fig. 9 entlang der Linie XI-XI geschnitten.

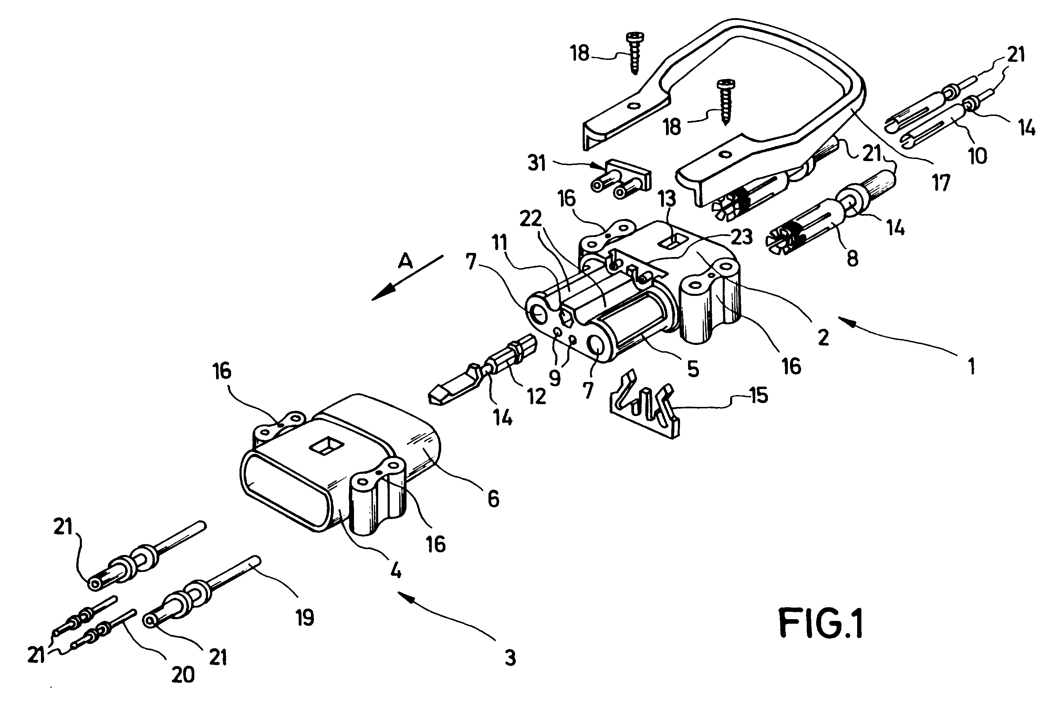

In Fig. 1 sind die wesentlichen Bauteile der erfindungsgemäßen Lade- und Fluidsteckvorrichtung gezeigt. Der Einfachheit halber sind Elektro- und Fluidleitungen in Fig. 1 nicht dargestellt. Die Steckvorrichtung besteht aus einem Stecker 1 mit einem Steckergehäuse 2 und einer Dose 3 mit Dosengehäuse 4. Das Steckergehäuse 2 und das Dosengehäuse 4 sind bevorzugt jeweils aus einem Kunststoffmaterial gespritzt worden. Das Steckergehäuse 2 ist mit einem Steckansatz 5 versehen, das zur Aufnahme in einem Schutzkragen 6 des Dosengehäuses 4 entsprechend geformt ist. Zwei parallel zueinander angeordnete Hauptaufnahmebohrungen 7 nehmen von der Rückseite des Steckergehäuses 2 einführbare Buchsenkontakte 8 auf. Ebenfalls sind zwischen den Hauptaufnahmebohrungen 7 zwei parallel zueinander angeordnete Aufnahmebohrungen 9 vorgesehen, in die von der Rückseite des Steckergehäuses 2 einsteckbare Pilotbuchsenkontakte 10 eingesteckt sind. Oberhalb der Aufnahmebohrungen 9 ist etwa in der Mitte des Steckansatzes 5 eine durchgehende Profilbohrung 11 angeordnet, in die ein entsprechend ausgeformter Codierstift 12 einsetzbar ist. Der Codierstift 12 kann je nach Verwendungszweck des Steckverbinders in einer anderen Position in die Profilbohrung 11 eingeschoben werden, wobei entsprechende auf dem hinteren Bereich des Codierstifts 12 angeordnete Werteangaben in einem Sichtfenster 13 des Steckergehäuses 2 angezeigt werden. In der Dose 3 ist ein in Fig. 1 nicht dargestellter entsprechender Codierstift eingesteckt, der jeweils nur mit einem entsprechend entgegengesetzt ausgerichteten Codierstift 12 des Steckers 1 gesteckt werden kann. Somit wird das Herstellen einer unerwünschten Steckverbindung vermieden. Die Buchsenkontakte 8, die Pilotkontakte 10 und der Codierstift 12 weisen jeweils eine umlaufende Ringnut 14 auf, in die ein entsprechend ausgeformter Sperrschieber 15 eingreift. Hierzu ist im hinteren Bereich des Steckergehäuses 2 auf dessen Unterseite ein in den Zeichnungen nicht dargestellter Einführschlitz zum Einführen des Sperrschiebers 15 vorgesehen.

Weiterhin sind jeweils Stecker 1 und Dose 3 auf beiden Seiten mit jeweils einer Befestigungslasche 16 versehen, die entweder zur ortsfesten Positionierung von Stecker 1 und Dose 3 oder zum Anbringen eines Handgriffs 17 mittels Schrauben 18 verwendet werden können.

In die Dose 3 sind 2 parallel zueinander angeordnete Stiftkontakte 19 einfügbar, die in die Buchsenkontakte 8 des Steckers 1 eingeführt werden können. Zwischen den Stiftkontakten 19 sind zwei Pilotkontakte 20 im Dosengehäuse 4 angebracht, die mit den Pilotbuchsenkontakten 10 im Stecker 1 gesteckt werden können. Die Befestigung der Stiftkontakte 19 und der Pilotkontakte 20 sowie des nicht dargestellten Codierstiftes erfolgt ebenfalls mit einem weiteren Sperrschieber 15 der von der Unterseite her in das Dosengehäuse 4 in einen dafür vorgesehenen Schlitz eingeschoben wird.

Sämtliche Kontakte in Stecker 1 und Dose 3 sind jeweils an ihrem Ende mit Anschlußbereichen 21 versehen, an die entsprechend zugeordnete, nicht dargestellte elektrische Kabel befestigt werden.

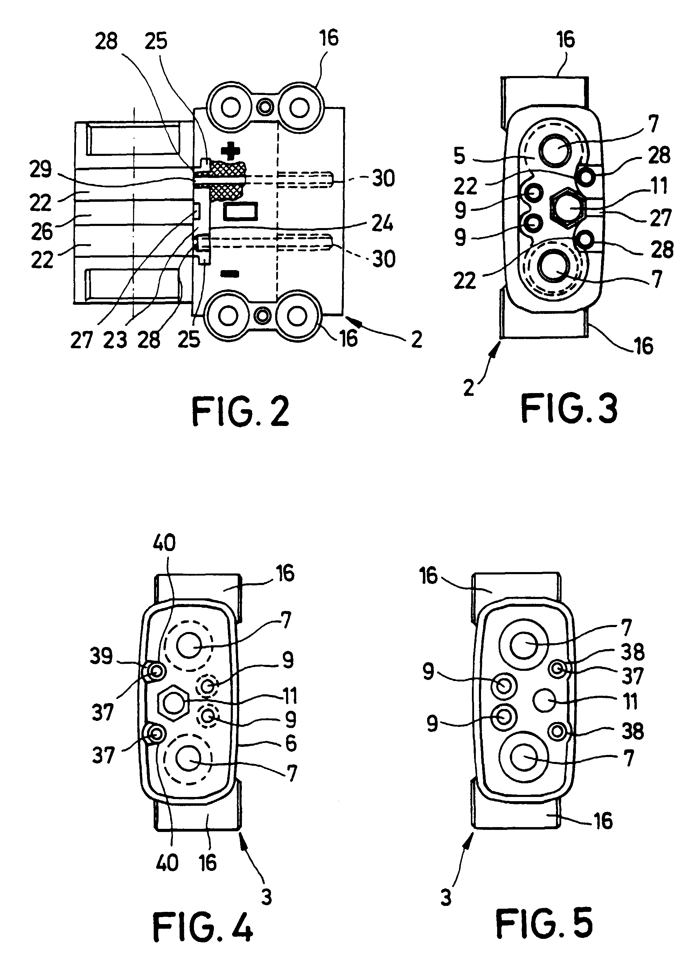

Wie insbesondere auch in Fig. 2 und 3 zu sehen ist, weist der Steckansatz 5 des Steckergehäuses 2 zwei parallel zueinander und in Steckrichtung A des Steckers 1 verlaufende Führungsnuten 22 auf, die auf beiden Seiten der als Aufnahme für den Codierstift 12 dienenden Profilbohrung 11 ausgebildet sind. Zwischen den beiden Führungsnuten 22 befindet sich somit der Codierstift 12. Die Führungsnuten 22 erstrecken sich über die gesamte Länge des Steckansatzes 5 und münden am übrigen Steckergehäuse 2 angeordneten Ende des Steckansatzes 5 in einer Aussparung 23, die beide Führungsnuten 22 miteinander verbindet. Eine den Führungsnuten 22 gegenüberliegende Rückwand 24 der Aussparung 23 erstreckt sich jeweils über die äußeren Kanten der Führungsnuten 22 hinaus, so daß Hinterschneidungen 25 gebildet werden. Am Ende einer Deckelplatte 26, die die Profilbohrung 11 verschließt, ist ein Klemmdorn 27 angeordnet, der sich vom Steckansatz 5 weg in die Mitte der Aussparung 23 erstreckt. Dabei ragt der Klemmdorn 27 nach oben über die Deckelplatte 26 hinaus.

An der Rückwand 24 der Aussparung 23 sind in Verlängerung der Führungsnuten 22 zwei im wesentlichen senkrecht zur Rückwand 24 angeordnete Aufstecknippel 28 angebracht. Die Länge der Aufstecknippel 28 entspricht in etwa der Breite der Aussparung 23, weshalb die Aufstecknippel 28 nicht in den Bereich des Steckansatzes 5 und damit in die Führungsnuten 22 hineinragen. Die Aufstecknippel 28 sind zylinderförmig ausgebildet und mit einem zentrisch angeordneten, im wesentlichen durch den Rest des Steckergehäuses 2 erstreckenden Fluidkanal 29 versehen. Dadurch ist jeweils in Verlängerung einer Füfrungsnut 22 ein Fluidkanal 29 bereitgestellt. Die Fluidkanäle 29 gehen an ihrem dem Aufstecknippel 28 abgewandten Ende in Fluidanschlüsse 30 über, die ähnlich wie die Aufstecknippel 28 ausgeformt sind. Die Fluidanschlüsse 30 werden, wie in diesem Ausführungsbeispiel zu sehen ist, zumeist länger ausgeformt als die Aufstecknippel 28.

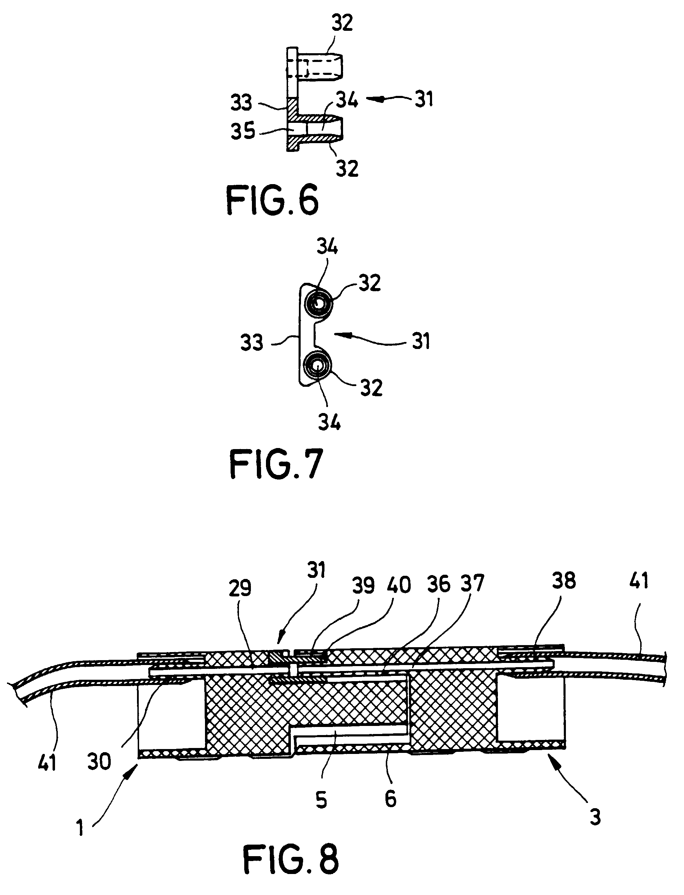

In die Aussparung 23 wird eine Dichtung 31, wie in Fig. 6 zu sehen, eingesetzt. Die Dichtung 31 weist zwei hülsenförmige Ansätze 32 auf, die im parallelen Abstand zueinander, senkrecht auf einer gemeinsamen Kopfplatte 33 angeordnet sind. Die Kopfplatte ist so ausgeformt, daß sie in die Hinterschneidungen 25 der Aussparung 23 eingreift und in ihrem mittleren Bereich zwischen der Rückwand 24 und dem Klemmdorn 27 positioniert ist. Weiterhin erstrecken sich durch die Dichtung 31 zwei jeweils zentrisch zu den hülsenförmigen Ansätzen 32 angeordnete Bohrungen 34. Die Aufstecknippel 28 greifen dabei in erweiterte Bohrungsansätze 35 der Dichtung 31 ein. Da die Dichtung 31 bevorzugt aus einem Gummiwerkstoff hergestellt wird, können die erweiterten Bohrungsansätze 35 im Durchmesser kleiner ausgestaltet sein als die Aufstecknippel 28, wodurch die Dichtung 31 dichtend auf dem Aufstecknippel 28 angeordnet ist. In dem Aufstecknippel 28 abgewandten Endbereich der Bohrung 34 ist jeweils trichterförmig erweitert. Durch die in die Aussparung 23 eingesetzte Dichtung 31 werden die Fluidkanäle 29 bis in die Führungsnuten 22 hinein verlängert. Hierzu sind die hülsenförmigen Ansätze 32 mit einer dazu geeigneten Länge versehen.

Der Schutzkragen 6 der Dose 3 umgreift im gesteckten Zustand des Steckverbinders im wesentlichen die gesamte Länge des Steckansatzes 5. Damit aus Versehen der Stecker 1 nicht verkehrt herum in die Dose 3 gesteckt werden kann, sind auf der Innenseite des Schutzkragens 6 zwei parallel zueinander angeordnete Führungsstege 36 angebracht, die sich im wesentlichen über die gesamte Länge des Schutzkragens 6 erstrecken und im wesentlichen formschlüssig im gesteckten Zustand des Steckverbinders formschlüssig in die Führungsnuten 22 des Steckers 1 eingreifen. In der Längsrichtung der Führungsstege 36 ist jeweils ein durchgehender Fluidkanal 37 eingebracht, der auf seinem gegenüberliegenden Ende in Fluidanschlüsse 38 mündet, wie in den Figuren 4 und 5 zu sehen ist. Im freien Endbereich des Schutzkragens 6 ist jeweils ein Schlitz zwischen den Führungsstegen 36 und des Schutzkragens 6 zum Formen von rohrförmigen Ansätzen 40 am freien Ende der Führungsstege 36 eingebracht. Die rohrförmigen Ansätze 40 sind bevorzugt an ihrem freien Ende mit einer umlaufenden Einführschräge versehen. Die Tiefe des Schlitzes 39 weist etwa eine gleiche Länge auf wie die hülsenförmigen Ansätze 32 der Dichtung 31. Dabei ist die Breite der Schlitze 39 so bemessen, daß die Wandung der hülsenförmigen Ansätze 32 der Dichtung 31 in diese eingeschoben werden können.

Im gesteckten Zustand von Stecker und Dose, wie insbesondere in Fig. 8 zu sehen ist, fluchten der Fluidkanal 37 der Dose 3 und der Fluidkanal 29 des Steckers 1 miteinander. Dabei greifen die rohrförmigen Ansätze 40 am Ende der Führungsstege 36 in die Bohrungen 34 der Dichtung 31 ein. Die Einführschrägen an den rohrförmigen Ansätzen 40 und die trichterförmige Ausgestaltung der Bohrungen 34 erleichtern hierbei das Zusammenstecken. Somit ist ein durchgehender Fluidkanal vom Fluidanschluß 38 der Dose 3 zum Fluidanschluß 30 des Steckers 1 geschaffen. Die Verbindungsstelle ist dabei sicher durch die Dichtung 31 abgedichtet. Auf die ähnlich wie die rohrförmigen Ansätze 40 ausgestalteten Fluidanschlüsse 30, 38 werden entsprechende Schlauchleitungen 41 aufgesteckt. Beim Stecken der erfindungsgemäßen kombinierten Lade- und Fluidsteckvorrichtung wird somit automatisch eine elektrische und eine fluidfördernde Verbindung erreicht.

Bezüglich Fig. 7 wird noch darauf verwiesen, daß die Dichtung 31 auch eine andere Ausgestaltung aufweisen kann. So kann z. B. die Kopfplatte 33, wie in dieser Figur gezeigt, trapezförmig ausgestaltet sein, wobei dann die Aussparung 23 und die Hinterschneidungen 25 entsprechend ausgeformt sein müssen. Die Trapezform erleichtert das Einführen der Dichtung 31 in die Aussparung 23.

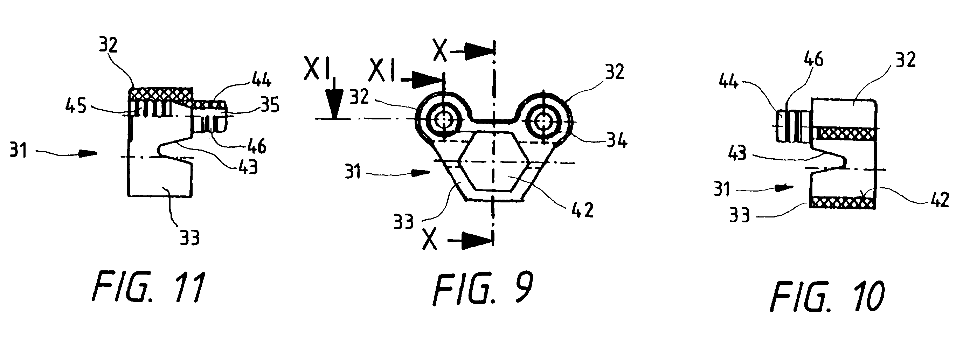

In den Figuren 9, 10 und 11 ist eine weitere Ausführungsform der Dichtung 31 dargestellt, bei der die trapezförmige Kopfplatte 33 vergrößert ausgebildet ist und in dieser eine Profilöffnung 42 angeordnet ist. Die Profilöffnung 42 fluchtet bei in das Steckergehäuse 2 eingesetzter Dichtung 31 mit der Aufnahme 11, so daß der Codierstift 12 zumindest bereichsweise in die Profilöffnung 42 zum Haltern der Dichtung 31 eingreift. Des weiteren weist die Dichtung 31 im Bereich der Profilöffnung 42 eine quer zu dieser verlaufende im wesentlichen V-förmige Nut 43 auf, wodurch die Dichtung 31 an dieser Stelle felxibler wird und sich besser am Steckergehäuse 2 einsetzen läßt. Dies gilt insbesondere für das Einführen von an der Dichtung 31 angeordneten nippelförmigen Ansätze 44, die in den Fluidkanal 29 eingreifen, so daß die Aufstecknippel 28 der vorhergehenden Varianten entfallen können. Weiterhin kann auch jeweils die Bohrung 34 der Dichtung 31 in Form einer Labyrinthdichtung, wie z.B. in Figur 11 in Form von umlaufenden Rillen 45, ausgebildet sein. Auch die Ansätze 44 können mit entsprechenden Rillen 46 zur Erhöhung der Dichtwirkung versehen sein. Die zuletzt genannten Ausformungen können sich aber auch auf alle Dichtungsausführungen erstrecken.

Im folgenden wird die Wirkungs- und Funktionsweise der erfindungsgemäßen kombinierten Lade- und Fluidsteckvorrichtung kurz erläutert.

Das Fügen der Dichtung 31 in die Aussparung 23 kann aufgrund des für die Dichtung 31 verwendeten Gummiwerkstoffs problemlos erfolgen. Die Dichtung 31 läßt sich durch den relativ dünnen Mittelbereich der Kopfplatte 33 sehr gut biegen, wodurch ein Einfädeln durch Herumführen um den Klemmdorn 27 und anschließendem Zurückdrücken der Dichtung 31 auf die Aufstecknippel 28, so daß diese in die erweiterten Bohrungsansätze 35 eingreifen, ermöglicht wird. Genauso leicht kann die Dichtung 31 auch wieder entfernt werden. Die Führungsnuten 22 und die Führungsstege 36 weisen bei dieser Erfindung eine Form auf, die ohne weiteres mit entsprechenden Führungsnuten oder -stegen von älteren Steckverbindern kompatibel sind. Im einzelnen bedeutet das, daß sowohl Stecker 1 als auch Dose 3 jeweils mit einem entsprechenden Stecker oder Dose einer älteren Steckverbindergeneration gepaart werden können. Bei der Dose 3 ist dies ohne weiteres Zutun möglich, wobei der Fluidkanal 37 dann ohne Funktion ist. Beim Stecker 1 muß für eine solche Paarung lediglich die Dichtung 31 aus der Aussparung 23 herausgenommen werden. Da die Aufstecknippel 28 nicht bis in die Führungsnuten 22 hineinragen, ist dann auch das Verbinden mit einer Dose älterer Generation ohne weiteres möglich. Die Fluidkanäle 29 sind dann beim erfindungsgemäßen Stecker 1 ebenfalls ohne Funktion.

Abgesehen von der sehr guten Kompatibilität mit älteren Ladesteckverbindersystemen, gestattet die erfindungsgemäße Lade- und Fluidsteckvorrichtung eine kompakte und relativ leicht bauende Verbindung zwischen z. B. einer Ladestation und einer Naßbatterie. Dadurch daß zwei Fluidkanäle bereitgestellt werden, können diese unterschiedlich verwendet werden. So kann das Fluid in beiden Fluidkanälen in die gleiche Richtung fließen, aber auch eine Umlaufströmung kann mit dieser Steckvorrichtung erfolgen. Der konstruktive Aufwand zur Bereitstellung dieser Funktionen ist bei der vorliegenden Erfindung äußerst gering.

Abschließend sei noch erwähnt, daß die Kontakte im Stecker 1 und Dose 3 natürlich auch entsprechend in den jeweiligen anderen Gehäusen angeordnet sein können. Das bedeutet, daß die Buchsenkontakte 8 und die Pilotbuchsenkontakte 10 auch im Dosengehäuse 4 und die Stiftkontakte 19 und die Pilotkontakte 20 auch im Steckergehäuse 2 angeordnet sein können.

## Patentansprüche

1. Kombinierte Lade- und Fluidsteckvorrichtung, insbesondere zum Anschließen eines Akkumulators mit Elektrolytumwälzung an eine Strom- und eine Fluidversorgungseinheit, mit einem, ein Steckergehäuse (2) aufweisenden Stecker (1) und einer Dose (3), die jeweils mit einem miteinander koppelbaren Elektroanschluß (8, 10, 20, 21), einem Fluidanschluß (30, 38) und entsprechenden Fluidkanälen (29, 37) in Stecker (1) und Dose (3) versehen sind, wobei der Stecker (1) einen Steckansatz (5) aufweist, der mindestens zwei parallel zueinander angeordnete Buchsenkontakte (8, 10) umgibt, zwischen denen eine Aufnahme (11) für einen Codierstift (12) angeordnet ist, und seitlich in die Aufnahme (11) übergeht, wobei zwischen der Aufnahme (11) und dem übrigen Steckansatz (5) zwei sich parallel zueinander und in Steckrichtung (A) von Stecker (1) und Dose (3) erstreckende Führungsnuten (22) gebildet sind, und wobei die Dose (3) mindestens zwei parallel zueinander angeordnete Stiftkontakte (19, 20) aufweist, die von einem Schutzkragen (6) umgeben sind, deren Innenseite mit zwei parallel zueinander angeordneten Führungsstegen (36) versehen ist, die so bemessen sind, daß die Außenkonturen von den Führungsstegen (36) im gesteckten Zustand von Stecker (1) und Dose (3), indem der Schutzkragen (6) der Dose (3) den Steckansatz (5) des Steckers (1) umschließt, in die Führungsnuten (22) formschlüssig, eingreifen, **dadurch gekennzeichnet**, daß die Führungsstege (36) am freien Ende des Schutzkragens (6) einen rohrförmigen Ansatz (40) aufweisen, die Fluidkanäle (37) der Dose (3) sich jeweils in Längsrichtung der Führungsstege (36) erstrecken und einseitig in den Fluidanschluß (38) der Dose (3) und andererseits in den rohrförmigen Ansatz (40) münden, und daß die Fluidkanäle (29) des Steckergehäuses (2) jeweils an dem freien Ende des Steckansatzes (5) abgewandten Ende der Führungsnuten (22) einseitig in den Fluidanschluß (30) des Steckers (1) übergehen, wobei die rohrförmigen Ansätze (40) der Führungsstege (36) im gesteckten Zustand von Stecker (1) und Dose (3) dichtend in die Fluidkanäle (29) des Steckergehäuses (2) eingreifen.

2. Steckvorrichtung nach Anspruch 1, **dadurch gekennzeichnet**, daß jeweils am Steckansatz (5) des Steckergehäuses (2) zugewandten Ende des Fluidkanals (29) eine Dichtung (31) angeordnet ist, in die der entsprechend zugeordnete rohrförmige Ansatz (40) im gesteckten Zustand von Stecker (1) und Dose (3) dichtend eingreift.

3. Steckvorrichtung nach Anspruch 2, **dadurch gekennzeichnet**, daß jeweils am Steckansatz (5) des Steckergehäuses (2) zugewandten Ende des Fluidkanals (29) ein rohrförmiger Aufstecknippel (28) angeordnet ist, dessen Bohrung einseitig im Fluidkanal (29) mündet, und auf dessen Außenmantel die Dichtung (31) aufgesetzt ist.

4. Steckvorrichtung nach Anspruch 3, **dadurch gekennzeichnet**, daß die Dichtung (31) jeweils als Hülse (32) mit einer Durchgangsbohrung ausgebildet ist, deren Länge größer ist als die Länge des Aufstecknippels (28).

5. Steckvorrichtung nach Anspruch 4, **dadurch gekennzeichnet**, daß die hülsenförmige Dichtung (31) einseitig einen erweiterten Bohrungsansatz (35) aufweist, in den der Aufstecknippel (28) im wesentlichen stramm eingesteckt ist.

6. Steckvorrichtung nach einem der Ansprüche 3 bis 5, **dadurch gekennzeichnet**, daß sich die Bohrung (34) der Dichtung (31) am Aufstecknippel (28) abgewandten Endbereich trichterförmig erweitert.

7. Steckvorrichtung nach einem der Ansprüche 3 bis 6, **dadurch gekennzeichnet**, daß jeweils am Fluidkanal (29) zugewandten Ende der Führungsnut (22) im Steckergehäuse (2) eine Aussparung (23) angeordnet ist, in die sich der Aufstecknippel (28) erstreckt und die Führungsnut (22) mündet, wobei die Dichtung (31) teilweise in der Aussparung (23) und teilweise in der Führungsnut (22) angeordnet ist.

8. Steckvorrichtung nach Anspruch 7, **dadurch gekennzeichnet**, daß die Dichtung (31) an dem Aufstecknippel (28) zugewandten Ende einen vergrößerten Kopf aufweist, der mit seinem gegenüber dem übrigen Umfang der Dichtung (31) überstehenden Rand in eine in der Aussparung (23) entsprechend ausgeformte Hinterschneidung (25) eingreift.

9. Steckvorrichtung nach Anspruch 8, **dadurch gekennzeichnet**, daß die Köpfe zweier parallel zueinander angeordneter Dichtungen einheitlich als Kopfplatte (33) ausgebildet sind, welche in die Aussparung (23) und die Hinterschneidungen (25) eingreift.

10. Steckvorrichtung nach Anspruch 9, **dadurch gekennzeichnet**, daß die Kopfplatte (33) der Dichtung (31) trapezförmig ausgebildet ist und in die entsprechend ausgeformten Hinterschneidungen (25) eingreift, wobei die kürzere Seitenkante der Kopfplatte (33) zum Grund der Aussparung (23) weist.

11. Steckvorrichtung nach Anspruch 9 oder 10, **dadurch gekennzeichnet**, daß zwischen hülsenförmigen Ansätzen (32) der Dichtung (31) ein Klemmdorn (27) in der Aussparung (23) des Steckergehäuses (2) angeordnet ist, und daß die Kopfplatte (33) der Dichtung (31) zwischen dem Klemmdorn (27) und einer Rückwand (24) der Aussparung (23) positioniert ist.

12. Steckvorrichtung nach einem der Ansprüche 1 bis 11, **dadurch gekennzeichnet**, daß im freien Endbereich des Schutzkragens (6) von der Dose (3) jeweils ein Schlitz (39) zwischen den Führungsstegen (36) und dem Schutzkragen (6) zum Formen der rohrförmigen Ansätze (40) angeordnet ist.

13. Steckvorrichtung nach Anspruch 12, **dadurch gekennzeichnet**, daß der Schlitz (39) eine Breite in etwa der Wanddicke der hülsenförmigen Ansätze (32) der Dichtung (31) aufweist.

14. Steckvorrichtung nach einem der Ansprüche 1 bis 13, **dadurch gekennzeichnet**, daß der rohrförmige Ansatz (40) am freien Ende mit einer umlaufenden Einführschräge versehen ist.

15. Steckvorrichtung nach einem der Ansprüche 1 bis 14, **dadurch gekennzeichnet**, daß die Fluidanschlüsse (30, 38) als rohrförmige Steckansätze ausgebildet sind, auf die Zuleitungsschläuche (41) aufsteckbar sind, wobei deren Außenkontur vorzugsweise eine sägezahnartige Profilierung aufweist.

16. Steckvorrichtung nach einem der Ansprüche 1 bis 15, **dadurch gekennzeichnet**, daß die Dichtung (31) aus einem flexiblen Material, bevorzugt einem Gummiwerkstoff, hergestellt ist.

17. Steckvorrichtung nach einem der Ansprüche 1 bis 16, **dadurch gekennzeichnet**, daß die Bohrung (34) der Dichtung (31) in Form einer Labyrinthdichtung ausgebildet ist.

18. Steckvorrichtung nach einem der Ansprüche 9 bis 17, **dadurch gekennzeichnet**, daß die Kopfplatte (33) der Dichtung (31) eine Profilöffnung (42) aufweist, die bei am Steckergehäuse (2) angeordneter Dichtung (31) fluchtend angeordnet ist und in die der Codierstift (12) zumindest bereichsweise eingreift.

## Claims

1. Combined charging and fluid connection device, in particular for the connection of a rechargeable battery with electrolyte circulation to an electrical power and fluid supply unit, having a plug (1), which has a plug housing (2), and a socket (3), which plug (1) and socket (3) are each provided with an electrical connection (8, 10, 20, 21), which can be coupled to one another, a fluid connection (30, 38) and corresponding fluid channels (29, 37) in the plug (1) and socket (3), the plug (1) having a plug attachment (5) which surrounds at least two female contacts (8, 10) which are arranged parallel to one another and between which a holder (11) for a coding pin (12) is arranged, and which plug attachment (5) merges at the side into the holder (11), two guide grooves (22) being formed between the holder (11) and the rest of the plug attachment (5) and extending parallel to one another and in the insertion direction (A) of the plug (1) and socket (3), and the socket (3) having at least two pin contacts (19, 20), which are arranged parallel to one another and are surrounded by a protective collar (6) whose inside is provided with two guide webs (36), which are arranged parallel to one another and are dimensioned such that the outer contours of the guide webs (36) engage in a positively locking manner in the guide grooves (22) when the plug (1) and socket (3) are mated, in that the protective collar (6) of the socket (3) surrounds the plug attachment (5) of the plug (1), characterized in that the guide webs (36) have a tubular attachment (40) at the free end of the protective collar (6), the fluid channels (37) in the socket (3) in each case extend in the longitudinal direction of the guide webs (36) and open at one end into the fluid connection (38) of the socket (3), and at the other end into the tubular attachment (40), and in that the fluid channels (29) in the plug housing (2) merge at one end into the fluid connection (30) of the plug (1), in each case at the free end of that end of the guide grooves (22) which faces away from the free end of the plug attachment (5), the tubular attachments (40) on the guide webs (36) engaging in a sealing manner into the fluid channels (29) in the plug housing (2) when the plug (1) and socket (3) are mated.

2. Connection device according to Claim 1, characterized in that a seal (31) is in each case arranged at that end of the fluid channel (29) which faces the plug attachment (5) of the plug housing (2), in which seal (31) the correspondingly assigned tubular attachment (40) engages in a sealing manner when the plug (1) and socket (3) are mated.

3. Connection device according to Claim 2, characterized in that a tubular plug-on nipple (28) is arranged in each case at that end of the fluid channel (29) which faces the plug attachment (5) of the plug housing (2), the bore of which tubular plug-on nipple (28) opens at one end in the fluid channel (29), and the seal (31) is fitted on its outer casing.

4. Connection device according to Claim 3, characterized in that the seal (31) is in each case constructed as a sleeve (32) having a through-hole whose length is greater than the length of the plug-on nipple (28).

5. Connection device according to Claim 4, characterized in that the seal (31), which is in the form of a sleeve, has an expanded bore attachment (35) at one end, into which the plug-on nipple (28) is inserted, such that it is essentially rigid.

6. Connection device according to one of Claims 3 to 5, characterized in that the bore (34) of the seal (31) is expanded in the form of a funnel at the end region which faces away from the plug-on nipple (28).

7. Connection device according to one of Claims 3 to 6, characterized in that a cutout (23) is arranged in each case at that end of the guide groove (22) in the plug housing (2) which faces the fluid channel (29), into which cutout (23) the plug-on nipple (28) extends and the guide groove (22) opens, the seal (31) being arranged partially in the cutout (23) and partially in the guide groove (22).

8. Connection device according to Claim 7, characterized in that the seal (31) has an enlarged head at the end which faces the plug-on nipple (28), that edge of which head which projects beyond the rest of the circumference of the seal (31) engaging in an undercut (25) which is formed appropriately in the cutout (23).

9. Connection device according to Claim 8, characterized in that the heads of two seals which are arranged parallel to one another are designed integrally as a head plate (33) which engages in the cutout (23) and the undercuts (25).

10. Connection device according to Claim 9, characterized in that the head plate (33) of the seal (31) is of trapezoidal design and engages in the correspondingly formed undercuts (25), the shorter side edge of the head plate (33) pointing towards the base of the cutout (23).

11. Connection device according to Claim 9 or 10, characterized in that a clamping pin (27) is arranged in the cutout (23) in the plug housing (2), between attachments (32) in the form of sleeves on the seal (31), and in that the head plate (33) of the seal (31) is positioned between the clamping pin (27) and a rear wall (24) of the cutout (23).

12. Connection device according to one of Claims 1 to 11, characterized in that a slot (39) is in each case arranged in the free end region of the protective collar (6) of the socket (3), between the guide webs (36) and the protective collar (6), to match the shape of the tubular attachments (40).

13. Connection device according to Claim 12, characterized in that the slot (39) has a width approximately equal to the wall thickness of the attachments (32), which are in the form of sleeves, on the seal (31).

14. Connection device according to one of Claims 1 to 13, characterized in that the tubular attachment (40) is provided with a circumferential insertion guide incline at the free end.

15. Connection device according to one of Claims 1 to 14, characterized in that the fluid connections (30, 38) are designed as tubular plug attachments onto which supply hoses (41) can be plugged, their outer contour preferably being profiled in a sawtooth shape.

16. Connection device according to one of Claims 1 to 15, characterized in that the seal (31) is produced from a flexible material, preferably from a rubber material.

17. Connection device according to one of Claims 1 to 16, characterized in that the bore (34) of the seal (31) is designed in the form of a labyrinth seal.

18. Connection device according to one of Claims 9 to 17, characterized in that the head plate (33) of the seal (31) has a profiled opening (42) which is arranged such that it is flush with a seal (31) arranged on the plug housing (2), and into which the coding pin (12) engages, at least in some places.

## Revendications

1. Dispositif combiné de connexion électrique et fluide, servant en particulier à raccorder un accumulateur à circulation d'électrolyte, à une unité d'alimentation en courant et en fluide, par une fiche (1) présentant un boîtier de fiche (2) et une prise (3) qui sont pourvus respectivement de raccords électriques (8, 10, 20, 21) pouvant être accouplés les uns avec les autres, avec un raccord pour fluide (30, 38) et des canaux pour fluide correspondants (29, 37) dans la fiche (1) et la prise (3), la fiche (1) présentant un appendice d'enfichage (5) qui entoure au moins deux contacts (8, 10) disposés parallèlement l'un à l'autre, entre lesquels est disposé un logement (11) pour une tige de codage (12), et qui devient latéralement le logement (11), alors qu'entre le logement (11) et le reste de l'appendice de connexion (5) on a formé deux rainures de guidage (22) qui s'étendent parallèlement l'une à l'autre dans le sens de l'enfichage (A) de la fiche (1) et de la prise (3), et alors que la prise (3) présente au moins deux broches de contact (19, 20) disposées parallèlement l'une à l'autre, qui sont entourées par une collerette de protection (6) dont la surface intérieure est pourvue de deux nervures de guidage (36) disposées parallèlement l'une à l'autre et dimensionnées d'une façon telle que les contours extérieurs viennent en prise par engagement par la forme dans les rainures de guidage (22) quand la fiche (1) et la prise (3) sont en position emboîtée, tandis que la collerette de protection (6) de la prise (3) entoure l'appendice de connexion (5) de la fiche (1),
caractérisé en ce que
les nervures de guidage (36) présentent, à l'extrémité libre de la collerette de protection (6), un appendice en forme de tube (40), en ce que les canaux de fluide (37) de la prise (3) s'étendent dans le sens longitudinal des nervures de guidage (36), d'un côté dans le raccord pour fluide (38) de la prise (3) et de l'autre dans l'appendice en forme de tube (40), et en ce que les canaux de fluide (29) du boîtier de fiche (2) passent d'un côté dans le raccord pour fluide (30) de la fiche (1) à l'extrémité libre de l'appendice de connexion (5), située à l'opposé des rainures de guidage (22), les appendices en forme de tube (40) des nervures de guidage (36) venant en prise, quand la fiche (1) et la prise (3) sont en position emboîtée, de façon étanche dans les canaux de fluide (29) du boîtier de fiche (2).

2. Dispositif de connexion selon la revendication 1,
caractérisé en ce que
respectivement à l'extrémité du canal de fluide (29) tournée vers l'appendice de connexion (5) du boîtier de fiche (2), est disposé un joint d'étanchéité (31) dans lequel vient en prise de façon étanche l'appendice de forme tubulaire (40) associé de façon correspondante, quand la fiche (1) et la prise (3) sont en position emboîtée.

3. Dispositif de connexion selon la revendication 2,
caractérisé en ce que
respectivement à l'extrémité du canal de fluide (29) tournée vers l'appendice de connexion (5) du boîtier de fiche (2), est disposé un raccord d'enfichage (28) de forme tubulaire dont l'alésage débouche d'un côté dans le canal de fluide (29) et sur l'enveloppe extérieure duquel est mis le joint d'étanchéité (31).

4. Dispositif de connexion selon la revendication 3,
caractérisé en ce que
le joint d'étanchéité (31) est constitué respectivement sous la forme d'une douille (32) avec un alésage de bout en bout dont la longueur est plus grande que la longueur du raccord d'enfichage (28).

5. Dispositif de connexion selon la revendication 4,
caractérisé en ce que
le joint d'étanchéité (31) en forme de douille présente d'un côté un appendice élargi (35) dans lequel est enfoncé de façon sensiblement raide le raccord d'enfichage (28).

6. Dispositif de connexion selon l'une des revendications 3 à 5,
caractérisé en ce que
l'alésage (34) du joint d'étanchéité (31) s'élargit en forme d'entonnoir sur la zone terminale située à l'opposé du raccord d'enfichage (28).

7. Dispositif de connexion selon l'une des revendications 3 à 6,
caractérisé en ce que
respectivement à l'extrémité de la rainure de guidage (22) tournée vers le canal de fluide (29), est disposée, dans le boîtier de fiche (2) un évidement (23) dans lequel s'étend le raccord d'enfichage (28) et dans lequel débouche la rainure de guidage (22), le joint d'étanchéité (31) étant disposé en partie dans l'évidement (23) et en partie dans la rainure de guidage (22).

8. Dispositif de connexion selon la revendication 7,
caractérisé en ce que
le joint d'étanchéité (31) présente, à l'extrémité tournée vers le raccord d'enfichage (28), une tête agrandie qui vient en prise dans une contre-dépouille formée de façon correspondante dans l'évidement (23), avec son bord en surplomb par rapport au reste du pourtour du joint d'étanchéité (31).

9. Dispositif de connexion selon la revendication 8,
caractérisé en ce que
les têtes de deux joints d'étanchéité disposés parallèlement l'un à l'autre sont constitués unitairement sous la forme d'une plaque de tête (33) qui vient en prise dans l'évidement (23) et les contre-dépouilles (25).

10. Dispositif de connexion selon la revendication 9,
caractérisé en ce que
la plaque de tête du joint d'étanchéité (31) a une forme de trapèze et vient en prise dans les contre-dépouilles formées de façon correspondante (25), le bord latéral le plus court de la plaque de tête (33) étant orienté vers le fond de l'évidement (23).

11. Dispositif de connexion selon la revendication 9 ou 10,
caractérisé en ce que
entre les appendices en forme de douille (32) du joint d'étanchéité (31), on dispose un mandrin de serrage (27) dans l'évidement (23) du boîtier de fiche (2) et en ce que la plaque de tête (33) du joint d'étanchéité (31) est positionnée entre le mandrin de serrage (27) et une paroi arrière (24) de l'évidement (23).

12. Dispositif de connexion selon l'une des revendications 1 à 11,
caractérisé en ce que
à l'extrémité libre de la collerette de protection (6) de la prise (3) on dispose respectivement une fente (39) entre les nervures de guidage (36) et la collerette de protection (6) pour former les appendices tubulaires (40).

13. Dispositif de connexion selon la revendication 12,
caractérisé en ce que
la fente (39) présente une largeur correspondant à peu près à l'épaisseur de paroi des appendices en forme de douille (32) du joint d'étanchéité (31).

14. Dispositif de connexion selon l'une des revendications 1 à 13,
caractérisé en ce que
l'appendice en forme de tube (40) est pourvu, à son extrémité libre, d'un chanfrein d'introduction qui fait tout le tour.

15. Dispositif de connexion selon l'une des revendications 1 à 14,
caractérisé en ce que
les raccords de fluide (30, 38) sont constitués sous la forme d'appendices d'enfichage et peuvent être enfoncés sur les tuyaux d'alimentation (41), leur contour extérieur présentant de préférence un profil en dents de scie.

16. Dispositif de connexion selon l'une des revendications 1 à 15,
caractérisé en ce que
le joint d'étanchéité (31) est fabriqué en une matière flexible, de préférence une matière caoutchouteuse.

17. Dispositif de connexion selon l'une des revendications 1 à 16,
caractérisé en ce que
l'alésage (34) du joint d'étanchéité (31) est constitué sous la forme d'une garniture à labyrinthe.

18. Dispositif de connexion selon l'une des revendications 9 à 17,
caractérisé en ce que
la plaque de tête (33) du joint d'étanchéité (31) présente une ouverture profilée (42) qui arrive à fleur quand le joint d'étanchéité (31) est disposé sur le boîtier de fiche (2), et dans laquelle la broche de codage (12) vient en prise au moins localement.
